# EUROPEAN PATENT APPLICATION

(11) **EP 4 424 559 A1**
(43) Date of publication of application: **04.09.2024**
(21) Application number: 21961953.3
(22) Date of filing: 29.10.2021
(51) Int. Cl.: B60R 11/02

(54) **VEHICLE-MOUNTED DISPLAY SCREEN ADJUSTING DEVICE AND VEHICLE**

(71) Applicant: Zhejiang Smart Intelligence Technology Co., Ltd., Ningbo, Zhejiang 315336 (CN)
(72) Inventor: CAI, Hongjie, Hangzhou Bay New District Ningbo, Zhejiang 315336 (CN); YANG, Jun, Hangzhou Bay New District Ningbo, Zhejiang 315336 (CN); WANG, Congbin, Hangzhou Bay New District Ningbo, Zhejiang 315336 (CN); JIANG, Jian, Hangzhou Bay New District Ningbo, Zhejiang 315336 (CN)
(74) Representative: Zaboliene, Reda
(86) International application number: PCT/CN2021/127723
(87) International publication number: WO 2023/070601

(57) **Abstract**

A vehicle-mounted display screen adjusting device, comprising: a first support (32) connected to a display screen (10); a curved slide rail (31) arranged along the vertical direction of a center console of a vehicle, the first support (32) being mounted on the curved slide rail (31); and a driving mechanism (36) connected to the first support (32) and comprising a first driving member (36) for driving the first support (32) to perform a curve translational motion along the curved slide rail. Also disclosed is a vehicle, comprising the vehicle-mounted display screen adjusting device. According to the device, the display screen is guided to ascend and descend by means of the curve slide rail, an angle formed by the display screen and the horizontal plane is different when the display screen is located at different positions of the curve slide rail, the device can adapt to drivers with different heights and sitting postures, and meanwhile, the device can adapt to different adjusted positions of the seat, and drivers with different sitting postures can easily see the display screen.

## Description

### BACKGROUND OF THE APPLICATION

### Field of the Application

The present invention relates to the field of vehicle body structure, and more particularly to a vehicle-mounted display screen adjusting device and a vehicle.

### Description of Related Art

As demand for vehicle human-computer interaction functions is getting higher and higher, the functions of a vehicle display have become increasingly rich in recent years. In order to obtain best viewing effect, an angel of the vehicle display should be adjusted, because people in the vehicle have various of sitting postures and viewing angles. However, it is inconvenient to adjust an angle of a traditional vehicle display, thus affecting the user experience and driving safety, making the structure being complex, and occupying large capacity of the vehicle.

The foregoing description is provided to provide general background information and does not necessarily constitute prior art.

### BRIEF SUMMARY OF THE APPLICATION

### Technical Problem

It is inconvenient to adjust an angle of a traditional vehicle display, thus affecting the user experience and driving safety, making the structure being complex, and occupying large capacity of the vehicle.

### Technical Solution

The object of the present application is to provide a vehicle-mounted display screen adjusting device and a vehicle with a display screen which is capable of moving up and down.

A vehicle-mounted display screen adjusting device provided in the present invention includes:
a first support, the first support is connected to a display screen;
a curved sliding rail, the curved sliding rail is arranged along an up and down direction of a central control panel of a vehicle, and the first support is disposed on the curved sliding rail;
a driving mechanism, the driving mechanism is connected to the first support, and the driving mechanism includes a first driving member configured to drive the first support to perform curvilinear motion along the curved sliding rail.

Furthermore, the drive mechanism further includes:
a first pull rope, the first pull rope is connected to the first support to pull the first support downward;
a second pull rope, the second pull rope is connected to the first support to pull the first support upward;
a first wire wheel, the first wire wheel is mounted in the central control panel and driven to rotate by the first driving member. The front ends of the first pull rope and the second pull rope are connected to the first support. The rear ends of the first pull rope and the second pull rope are connected to each other and then sleeved on a curved outer edge of the first wire wheel, and is synchronously driven by the first wire wheel. The first pull rope pulls the first support downward when the first wire wheel rotates in a first rotation direction, and the second pull rope pulls the first support upward when the first wire wheel rotates in a second rotation direction opposite to the first rotation direction.

Furthermore, the first support includes:
a seat body, the seat body is connected to the display screen;
a slider, the slider is mounted in the seat body, and is capable of performing curvilinear motion along the curved sliding rail;
a movable pulley, the movable pulley is connected to the slider and follows the movement of the slider. The front end of the first pull rope is fixed to central control panel after going around a curved outer edge of the movable pulley. The first pull rope pulls the movable pulley downward when the first wire wheel rotates in the first rotation direction, and then pulls the slider downward along the curved sliding rail.

Furthermore, it further includes a first fixed pulley, and the first fixed pulley is mounted in the central control panel and located above the curved sliding rail. The front end of the second pull rope is fixed to an upper end of the seat body after going around a curved outer edge of the first fixed pulley. The second pull rope pulls the seat body upward when the first wire wheel rotates in the second rotation direction, and then pulls the slider upward along the curved sliding rail.

Furthermore, the driving mechanism further includes:
a second gear, the second gear is mounted in the central control panel and driven to rotate by the first driving member;
a curved rack, the curved rack is mounted in the first support, the curved rack is parallel to the curved sliding rail and meshed with the second gear. The first driving member drives the second gear to rotate, thereby driving the first support to move along the curved sliding rail.

Furthermore, the curved sliding rail is an arc-shaped curved sliding rail. A convex surface of the curved sliding rail faces the front of the central control panel, and a concave surface of the curved sliding rail faces the rear of the central control panel.

Furthermore, it further includes a rotating module configured to connect the first support with the display screen. The rotating module includes:
a second support, the second support is connected to the first support and rotatable relative to the first support. The display screen is connected to the second support;
a second driving member, the second driving member is mounted in the first support;
a first gear, the first gear is mounted to the display screen and driven to rotate by the second driving member. The second driving member drives the first gear to rotate, thereby driving the display screen to transversely rotate relative to the first support.

Furthermore, it further includes a swinging module for connecting the first support with the display screen. The swinging module includes:
a third support, the third support is connected to the first support and rotatable relative to the first support. The display screen is connected to the third support;
a fourth driving member, the fourth driving member is mounted in the first support;
a third gear, the third gear is fixed to the third support, and driven to rotate by the fourth driving member. The fourth driving member drives the third gear to rotate, thereby driving the third support to swing left and right relative to the first support.

Furthermore, it further includes a rotating module connected to the display screen configured to enable the display screen transversely rotating and a swinging module connected to the rotating module configured to enable the display screen swinging left and right.

The swinging module includes:
a third support, the third support is connected to the first support and rotatable relative to the first support;
a fourth driving member, the fourth driving member is mounted in the first support;
a third gear, the third gear is fixed to the third support driven to rotate by the fourth driving member. The fourth driving member drives the third gear to rotate, thereby driving the third support to swing left and right relative to the first support.

The rotating module includes:
a second driving member, the second driving member is mounted on the third support;
a first gear, the first gear is mounted to the display screen and driven to rotate by the second driving member. The second driving member drives the first gear to rotate, thereby driving the display screen to transversely rotate relative to the third support.

The present invention further provides a vehicle, including the vehicle-mounted display screen adjusting device described as above.

### BRIEF DESCRIPTION OF THE DRAWINGS

FIG. 1 is a schematic view showing a vehicle-mounted display screen adjusting device according to a first embodiment of the present invention.
FIG. 2 is a schematic view of the vehicle-mounted display screen adjusting device of FIG. 1 with a slider positioned on another position of the curved sliding rail.
FIG. 3 is a schematic view of the vehicle-mounted display screen adjusting device of FIG. 1 under an A-A viewing angle with the display screen hidden.
FIG. 4 is a schematic view of a vehicle-mounted display screen adjusting device according to a second embodiment of the present invention.
FIG. 5 is a schematic view of a vehicle-mounted display screen adjusting device according to a third embodiment of the present invention with a first support positioned at the top end of a curved sliding rail.
FIG. 6 is a schematic view of the vehicle-mounted display screen adjusting device of FIG. 5 with the first support positioned at the bottom end of the curved sliding rail.

### DETAILED DESCRIPTION OF THE APPLICATION

The following will provide a further detailed description of the specific implementations of the present application in conjunction with the accompanying drawings and embodiments. The following embodiments are used to illustrate the present application, but are not intended to limit the scope of the present application.

### First Embodiment

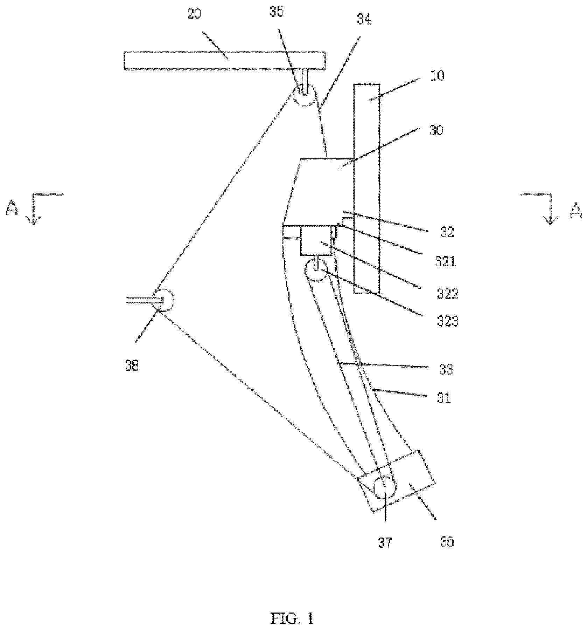

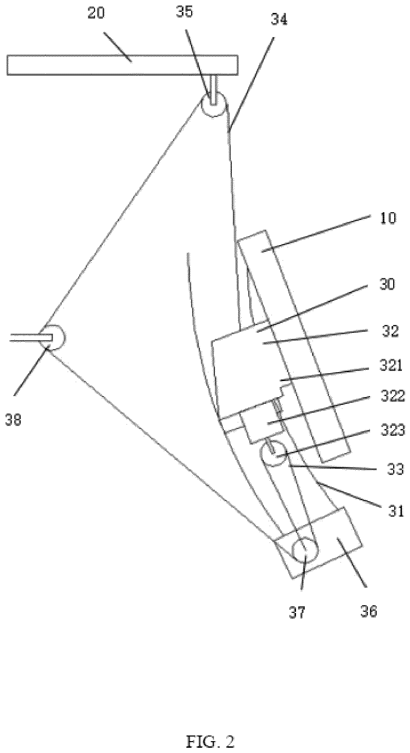

Referring to FIG. 1 to FIG. 3, the vehicle-mounted display screen adjusting device of the first embodiment of the present invention connects a display screen 10 with a central control panel 20, and includes a translating module 30 and a rotating module 40. The rotating module 40 is connected to the display screen 10 to make the display screen 10 be capable of transversely rotating. The translating module 30 is connected to the rotating module 40 to make the display screen 10 and the rotating module 40 be capable of moving up and down along a linear direction.

The translating module 30 includes a curved sliding rail 31, a first support 32, a driving mechanism and a rolling shutter mechanism (not shown). The driving mechanism is connected to the first support 32 to drive the first support 32 to perform curvilinear motion along the curved sliding rail 31. The driving mechanism includes a first pull rope 33, a second pull rope 34, a first fixed pulley 35, a first driving member 36, a first wire wheel 37, a second fixed pulley 38 and a first worm wheel (not shown).

The curved sliding rail 31, the first driving member 36, the first wire wheel 37, the first fixed pulley 35, the second fixed pulley 38 and the first worm wheel are disposed in the central control panel 20. The curved sliding rail 31 is arranged along an up and down direction of the central control panel 20, and the first support 32 is capable of performing curvilinear motion along the curved sliding rail 31. The first driving member 36 drives the first support to move. The first wire wheel 37 is disposed below the curved sliding rail 31, and the fixed pulley 35 is disposed upon the curved sliding rail 31. An output shaft of the first driving member 36 is connected to an input end of the first worm wheel, and an output end of the first worm wheel drives the first wire wheel 37 to rotate. A rotary speed transferred from the first driving member 36 to the first wire wheel 37 is reduced by the first worm wheel.

The first support 32 includes a seat body 321, a slider 322 and a movable pulley 323. The slider 322 and the movable pulley 323 are mounted in the seat body 321. The slider 322 is capable of performing curvilinear motion along the curved sliding rail 31. The movable pulley 323 is disposed below the slider 322 and follows the movement of the slider 322.

Rear ends of the first pull rope 33 and the second pull rope 34 are connected to each other to form one pull rope and then sleeved on a curved outer edge of the first wire wheel 37. The front end of the first pull rope 33 is fixed to central control panel 20 with the joint being below the curved sliding rail 31 after going around a curved outer edge of the movable pulley 323. The first pull rope 33 is pulled downward to pull the movable pulley 323 downward, thereby pulling the slider 322 to perform curvilinear motion downward along the curved sliding rail 31.

The front end of the second pull rope 34 is fixed to the seat body 321 after going around a curved outer edge of the fixed pulley 38. The second pull rope 34 is pulled upward to pull the seat body 321 upward, thereby pulling the slider 322 to perform curvilinear motion upward along the curved sliding rail 31. In the embodiment, the first pull rope 33 and the second pull rope 34 further go around the second fixed pulley 38 to change a direction of a pulling force, so that it is easy to arrange the pull ropes in the central control panel 20. In another embodiment, more fixed pulleys 38 maybe occupied to further change the direction of the pulling force.

The first pull rope 33 and the second pull rope 34 are synchronously driven by the first wire wheel 37. The first pull rope 33 pulls the first support 32 downward when the first wire wheel 37 rotates in a first rotation direction. The second pull rope 34 pulls the first support 32 upward when the first wire wheel 37 rotates in a second rotation direction opposite to the first rotation direction. The way of the first wire wheel 37 driving the first pull rope 33 and the second pull rope 34 may be friction force manner of belt-belt pulley or mechanical force manner of gears meshing each other.

In the embodiment, the display screen 10 moves up and down via the translating module 30. Further, an angle formed by the display screen 10 and the horizontal plane changes as the display screen 10 positioned at different positions, so as to match drivers having different heights and sitting postures and match different positions of a seat. Therefore, the driver with obvious sitting posture can catch sight of the display screen 10. The direction of the pulling force is changed by the fixed pulley 38, and the movable pulley 323 is occupied to save labor. Several pulleys cooperate with each other to enable one single wire wheel control the display screen 10 going up and down, thus making the structure be simple, and occupying small capacity of the central control panel 20.

In another embodiment, the first wire wheel 37 may be arranged at other positions with arranging more fixed pulleys 38 to change the direction of the pulling force. Movable pulleys 323 may be disposed on an upper end and a lower end of the first support 32 to further save labor, thus reducing demand for the output torque of the first driving member 36.

A hall sensor (not shown) is disposed on the first driving member 36. When the display screen 10 encounters resistance during the lifting process, such as being blocked by a human hand, the torque on the output shaft of the first driving member 36 will change. When the hall sensor senses that the torque of the first driving member 36 changes, the first driving member 36 is stopped to prevent the first driving member 36 from being locked. In another embodiment, a slipping or a clutch mechanism may be disposed on the first driving member 36 to avoid damage the first driving member 36 when the display screen 10 encounters resistance during moving.

The rolling shutter mechanism includes a scroll member (not shown) and a rolling shutter member. The rolling shutter member is a long and windable structure, and may be made of metal or plastic etc. The scroll member is arranged in the central control panel 20. An end of the rolling shutter mechanism is connected to the bottom of the first support 32, and the other end is connected to the scroll member. The scroll member includes a rotating shaft and a torsion spring. The rotating shaft is connected to a rear end of the rolling shutter member, and the torsion spring is connected to the rotating shaft to drive the rotating shaft to rotate, thereby pulling to coil the rolling shutter member.

When the first support 32 moves upward along the curved sliding rail 31, the rolling shutter member maybe pulled and unfolded to cover the curved sliding rail 31, so as to prevent the curved sliding rail 31 from being exposed and affecting the appearance. When the first support 32 moves downward along the curved sliding rail 31, the scroll member pulls the rolling shutter member to be coiled and retracted.

Different texture and colors may be sprayed on the rolling shutter member to enhance the visual effect of the automotive interior. In another embodiment, the torsion spring may be alternated by an electric motor, and the electric motor drives the rotating shaft to pull to coil the rolling shutter member.

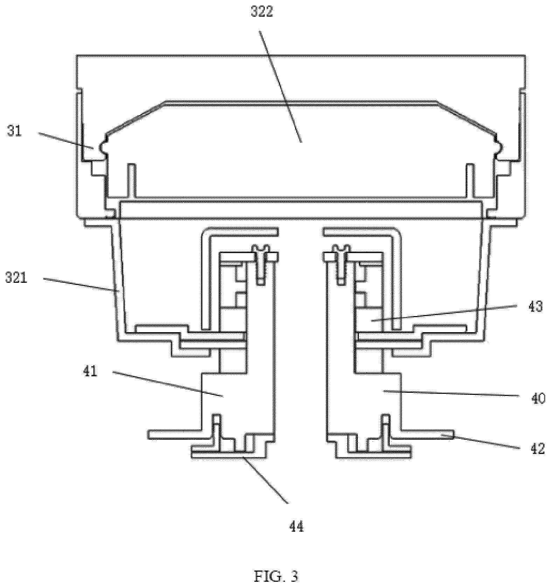

Referring to FIG. 3, the rotating module 40 includes a second support 41, a first gear 42, a bearing 43, a positioning pin plate 44, a second driving member (not shown) and a second worm wheel (not shown). A receiving groove (not labeled) is defined in the seat body 321, and a rotation shaft (not labeled) is formed on the second support 41. A front end of the rotation shaft is received in the receiving groove, and the display screen 10 is fixed on a rear end of the rotation shaft by the positioning pin plate 44. The bearing 43 is located between the receiving groove and the rotation shaft, and is configured to enable the second support 41 to transversely rotate relative to the first support 32, thus enable the display screen 10 to transversely rotate relative to the first support 32.

The second driving member and the second worm wheel are mounted on the first support 32, and the first gear 42 is fixed to the second support 41. The first gear 42 meshes with an output end of the second worm wheel, and an output shaft of the second driving member is connected with an input end of the second worm wheel. The second driving member drives the first gear 42 to rotate after the second worm wheel reducing the rotary speed transferred from the second driving member, thus driving the second support 41 to transversely rotate relative to the first support 32. In this embodiment, the rotation angle of the display screen 10 relative to the second support 41 is in a range from 0° to 90°, so that the display screen 10 may be shifted between a horizontal display mode and a vertical display mode.

Referring to FIG. 1, the curved sliding rail 31 is an arc-shaped curved sliding rail, with the convex surface facing the front of the vehicle and the concave surface facing the rear of the vehicle. By reason of the tangent to a top end of the curved sliding rail 31 being perpendicular to the horizontal plane, a display screen of the display screen 10 is perpendicular to the horizontal plane when the first support 32 is at the top end of the curved sliding rail 31.

The embodiment further provides a vehicle, including the vehicle display screen adjusting mechanism as described above, and the ECU (Electronic Control Unit, electronic control unit) is connected to the first driving member 36 and the second driving member. Drivers and passengers control start-stop and rotation direction of the first driving member 36 and the second driving member through the human-computer interaction and the algorithm in the ECU, thereby controlling the display screen 10 to lift or rotate. Therefore, it is convenient for drivers and co-drivers with different heights and different sitting postures to watch and operate the display screen 10.

The angle defined between the display surface of the display screen 10 and the horizontal plane changes in the lifting process of the display screen 10, because the display screen 10 is driven to go up and down via the curved sliding rail 31. For example, in the playing mode, the first driving member 36 drives the display screen 10 to rise to the top of the curved sliding rail 31, and simultaneously the third driving member 51 drives the display screen 10 to rotate 90 degrees. At this time, the display screen 10 is in the transversal mode, and the display surface is perpendicular to the horizontal plane, so that the display screen 10 has better display performance during showing amusement information such as videos and games.

In the embodiment, because the display screen 10 goes up and down guided by the curved sliding rail 31, an angle defined by the display screen and the horizontal plane changes as the display screen 10 positioned at different positions, so as to match drivers having different heights and sitting postures and match different positions of a seat. Therefore, the driver with obvious sitting posture can catch sight of the display screen 10. The display screen 10 goes up and down driven by the first wire wheel 37, the direction of the pulling force is changed by the fixed pulley 38, and the movable pulley 323 is occupied to save labor. Several pulleys cooperate with each other to enable one single wire wheel can control the display screen 10 to go up and down, thus making the structure be simple, and occupying small capacity of the central control panel 20. The display screen 10 may be switched between a horizontal state and a vertical state to improve the user experience when the display screen 10 is in a playing mode, because the display screen 10 is flexibly connected to the rotating module 40. It has a simple and credible structure and occupies little capacity of the vehicle, because the rotating module 40 to effect rotation function of the display screen 10 and the translating module 30 to effect lifting function of the display screen 10 are separately disposed. By reason of the concave surface of the curved sliding rail facing the rear of the vehicle and tangent to a top end of the curved sliding rail 31 being perpendicular to the horizontal plane, a display surface is perpendicular to the horizontal plane when the display screen 10 is at the top end. Thus the user experience of the display screen 10 in a playing mode is improved.

### Second Embodiment

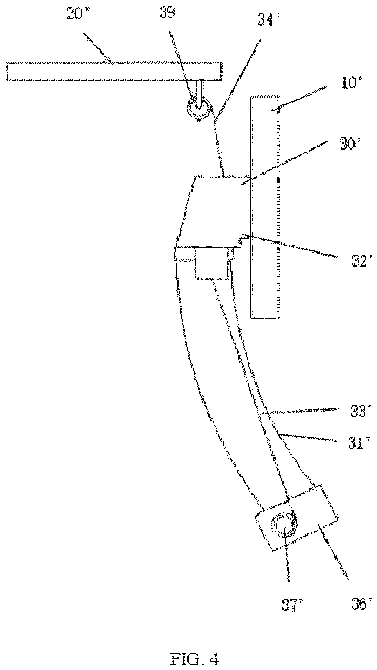

Referring to FIG. 4, difference between a vehicle-mounted display screen adjusting device of a second embodiment of the present invention and the above described vehicle-mounted display screen adjusting device of the first embodiment is that a translating module 30' includes a curved sliding rail 31', a first support 32' and a driving mechanism. The driving mechanism further includes a second wire wheel 39, a second worm wheel (not shown), a third driving member (not shown). The second wire wheel 39, the second worm wheel and the third driving member are mounted in a central control panel 20', and the second wire wheel 39 is disposed upon the curved sliding rail 31'.

A rear end of a first pull rope 33' is connected to the first wire wheel 37', and the first pull rope 33' goes around the first wire wheel 37' during the first wire wheel 37' rotating around a first rotation direction. The first wire wheel 37' can pull the first pull rope 33', and then pull the first support 32' to go downward along the curved sliding rail 31'. A rear end of a second rope 34' is connected to the second wire wheel 39, and the second pull rope 34' goes around the second wire wheel during the second wheel 39 rotating around the first rotation direction. The second wire wheel 39 can pull the second pull rope 34', and then pull the first support 32' to go upward. An output shaft of the third driving member is connected to an input shaft of the second worm wheel, and an output shaft of the second worm wheel drives the second wire wheel 39 to rotate. A rotary speed transferred from the third driving member to the second wire wheel 39 is reduced by the second worm wheel.

The ECU is connected to the first driving member 36' and the third driving member. The ECU controls the second wire wheel 39 to rotate in a second rotation direction thereby to extend the second wire wheel 34' and force the first support 32' to go downward, when the ECU controls the first wire wheel 37' to rotate in the first rotation direction and pull the first pull rope 33' to wind. The ECU controls first wire wheel 37' to rotate in the second rotation direction thereby to extend the first wire wheel 33' and force the first support 32' to go upward, when the ECU controls the second wire wheel 39 to rotate in the first rotation direction and pull the second pull rope 34' to wind.

### Third Embodiment

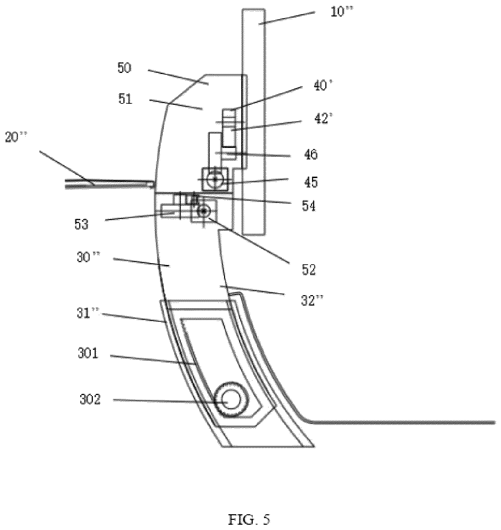

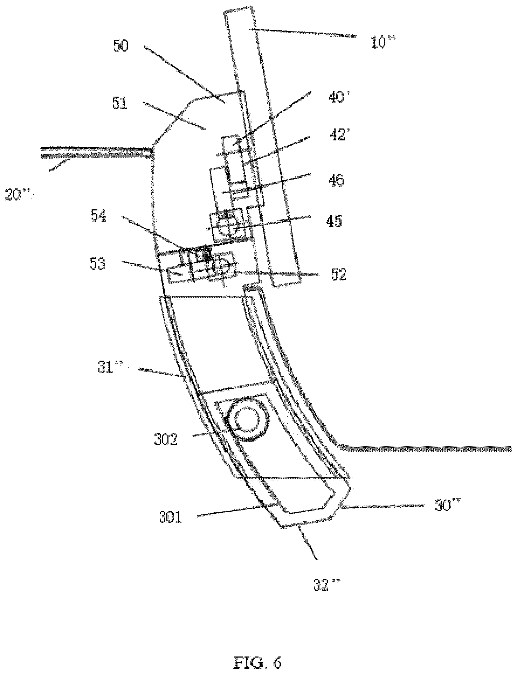

Referring to FIG. 5 and FIG. 6, difference between a vehicle-mounted display screen adjusting device of a third embodiment of the present invention and the above described vehicle-mounted display screen adjusting device of the first embodiment and the second embodiment is that the third embodiment includes a translating module 30", a rotating module 40' and a swinging module 50. The translating module 30" includes a curved sliding rail 31", a first support 32" and a driving mechanism. The driving mechanism includes a curved rack 301, a second gear 302, a driving member (not shown) and a third worm wheel (not shown). The curved sliding rail 31" is arranged along an up and down direction of a central control panel 20", and the first support 32" can perform curvilinear motion along the curved sliding rail 31". The first driving member, the third worm wheel and the second gear 302 are mounted in the central control panel 20". The curved rack 302 is mounted in the first support 32", and is parallel to the curved sliding rail 31". An output shaft of the first driving member is connected to an input end of the third worm wheel, an output end of the worm wheel meshes with the second gear 302, and the second gear 302 meshes with the curved rack 302.

A rotary speed transferred from the first driving member to the second gear 302 is reduced by the third worm wheel. The second gear 302 is driven by the first driving member and pulls the curved rack 302 to move, such that the first support 32' is driven to move up and down along the curved sliding rail 31". An angle defined between the display surface of the display screen 10" and the horizontal plane is different as the first support 32" is positioned at different positions of the curved sliding rail 31".

The display screen 10" moves up and down driven by the driving mechanism. Furthermore, an angle defined by the display screen 10" and the horizontal plane changes as the display screen 10" positioned at different positions, so as to match drivers having different heights and sitting postures and match different positions of a seat. Therefore, the driver with obvious sitting posture can catch sight of the display screen 10".

In another embodiment, the curved rack 302 may be disposed in the central control panel 20", and the first driving member, the third worm wheel and the second gear 302 are disposed in the first support 32". As before, the second gear 302 meshes with curved rack 302, and the first driving member drives the second gear 302 to move along the curved rack 302, thus driving the first support 32" to move along the curved sliding rail 31".

The swing unit 50 includes a third support 51 , a fourth driving member 52 , a fourth worm wheel 53 and a third gear 54. The third support 51 is disposed on the upper part of the first support 32", and is rotatablely connected to the first support 32". The third support 51 is capable of swinging left and right relative to the first support 32". The fourth driving member 52 and the fourth worm wheel 53 are mounted in the first support 32", and the third gear 54 is disposed at the bottom of the third support 51 and is fixed to the third support 51. The third gear 54 meshes with an output end of the fourth worm wheel 53, and an output shaft of the fourth driving member 52 is connected with an input end of the fourth worm wheel 53. The fourth driving member 52 drives the third gear 54 to rotate so as to drive the third support 51 swing left and right relative to the first support 32", after a rotary speed of the fourth driving member 52 is decreased by the fourth worm wheel 53. Thereby, the display screen 10" can swing left and right to make that it is convenient for the driver or co-driver to watch or operate the display screen 10". It has a simple and credible structure and occupies little capacity of the vehicle, because the swinging module 50 to effect swing function to swing left and right of the display screen 10" and the translating module 30 to effect lifting function of the display screen 10" are separately disposed.

The rotating module 40' includes a first gear 42', a second driving member 45 and a second worm wheel 46, and the second driving member 45 and the second worm wheel 46 are mounted in the third support 51. The first gear 42' is mounted on the back of the display screen 10". The first gear 42' meshes with an output end of the second worm wheel 46, and an input end of the second worm wheel 46 is connected with an output shaft of the second driving member 45. The second driving member 45 drives the first gear 42' to rotate so as to drive the display screen 10" to rotate relative to the third support 51, after a rotary speed of the second driving member 45 is decreased by the second worm wheel 46. In this embodiment, the rotation angle of the display screen 10" relative to the third support 51 is in a range from 0° to 90°, so that the display screen 10" may be shifted between a horizontal display mode and a vertical display mode.

In other embodiments, the vehicle-mounted display screen adjusting device may do not include the rotating module 40', and the display screen 10" is directly connected to the swinging module 50. The vehicle-mounted display screen adjusting device may do not include the swinging module 50, and the display screen 10" is directly connected to the rotating module 40' .

In the above described embodiments, the driving members may be machine can output kinetic energy such as an electric motor.

In the drawings, the size and relative sizes of layers and regions may be exaggerated for clarity. It should be understood that when an element such as a layer, region or substrate is referred to as being "formed on" "disposed on" or "mounted on" another element, it may be directly disposed on the other element or be disposed on an intermediate element. In contrast, when an element is referred to as being "directly formed on" or "directly disposed on" another element, no intermediate element is present.

In this description, the terms "up", "down", "front", "back", "left", "right", "top", "bottom", "in", "out", "vertical", "horizontal" mentioned to indicate orientation or position relationship are defined based on the position of the structure in the figures and the position between the structures in the figures, only for the clarity and convenience of expressing the technical solution. It should be understood that the use of these directional words should not limit the scope of protection in the present application.

In this description, unless otherwise clearly specified and limited, the terms "mounted", "connected" and "connection" should be interpreted in a broad sense, for example, it may be a fixed connection, a detachable connection, or an integral connection; it may be a mechanical connection or an electrical connection; it may be a direct connection or an indirect connection through an intermediary, and it may be the internal communication of two components. Those of ordinary skill in the art can understand the specific meanings of the above terms in specific situations.

In this description, the sequence adjectives to describe elements "first", "second" etc. are only used to distinguish similar objects, and are not intended to be used to describe a specific sequence or order, time, space, grade or other limitation.

In this description, the terms "include", "comprise" or any of its variants, is intended to cover non-exclusive inclusion, except for the elements listed, also including other elements that are not explicitly listed.

In this description, unless otherwise specified, the terms "several", "a plurality of" is intended to cover two or more.

The above examples and the features in the examples can be combined with each other. For the clarity and convenience of expressing the technical solution, not all possible combinations of the features in above described embodiments are disclosed. In the case of no conflict, the combinations of the features should be in the scope of the present description.

The above are embodiments of the present disclosure only, and should not be deemed as limitations to the scope of the present disclosure. It should be noted that variations and improvements will become apparent to those skilled in the art to which the present disclosure pertains. Therefore, the scope of the present disclosure is defined by the appended claims.

### Industrial applicability

The present invention provides a vehicle-mounted display screen adjusting device and a vehicle. The curved sliding rail guides the display screen to go up and down. An angle defined by the display screen and the horizontal plane changes as the display screen positioned at different positions, so as to match drivers having different heights and sitting postures and match different positions of a seat. Therefore, the driver with obvious sitting posture can catch sight of the display screen. The display screen goes up and down driven by the first wire wheel, a direction of a pulling force is changed by the fixed pulley, and the movable pulley is occupied to save labor. Several pulleys cooperate with each other to enable one single wire wheel can control the display screen up and down, thus making the structure be simple, and occupying small capacity of the central control panel. By reason of the concave surface of the curved sliding rail facing the rear of the vehicle and tangent to a top end of the curved sliding rail being perpendicular to the horizontal plane, a display surface is perpendicular to the horizontal plane when the display screen is at the topmost end, thus improving the user experience of the display screen in a playing mode.

## Claims

1. A vehicle-mounted display screen adjusting device, comprising:
a first support, the first support is connected to a display screen;
a curved sliding rail, the curved sliding rail is arranged along an up and down direction of a central control panel of a vehicle, and the first support is disposed on the curved sliding rail;
a driving mechanism, the driving mechanism is connected to the first support, and the driving mechanism comprises a first driving member configured to drive the first support to perform curvilinear motion along the curved sliding rail.

2. The vehicle-mounted display screen adjusting device as claimed in claim **1,** wherein the drive mechanism further comprises:
a first pull rope, the first pull rope is connected to the first support to pull the first support downward;
a second pull rope, the second pull rope is connected to the first support to pull the first support upward;
a first wire wheel, the first wire wheel is mounted in the central control panel and driven to rotate by the first driving member, the front ends of the first pull rope and the second pull rope are connected to the first support, the rear ends of the first pull rope and the second pull rope are connected to each other and then sleeved on a curved outer edge of the first wire wheel, and is synchronously driven by the first wire wheel, the first pull rope pulls the first support downward when the first wire wheel rotates in a first rotation direction, and the second pull rope pulls the first support upward when the first wire wheel rotates in a second rotation direction opposite to the first rotation direction.

3. The vehicle-mounted display screen adjusting device as claimed in claim **2,** wherein the first support comprises:
a seat body, the seat body is connected to the display screen;
a slider, the slider is mounted in the seat body, and is capable of performing curvilinear motion along the curved sliding rail;
a movable pulley, the movable pulley is connected to the slider and follows the movement of the slider, the front end of the first pull rope is fixed to central control panel after going around a curved outer edge of the movable pulley, the first pull rope pulls the movable pulley downward when the first wire wheel rotates in the first rotation direction, and then pulls the slider downward along the curved sliding rail.

4. The vehicle-mounted display screen adjusting device as claimed in claim **3,** wherein further comprises a first fixed pulley, and the first fixed pulley is mounted in the central control panel and located above the curved sliding rail, the front end of the second pull rope is fixed to an upper end of the seat body after going around a curved outer edge of the first fixed pulley, the second pull rope pulls the seat body upward when the first wire wheel rotates in the second rotation direction, and then pulls the slider upward along the curved sliding rail.

5. The vehicle-mounted display screen adjusting device as claimed in claim **1,** wherein the driving mechanism further comprises:
a second gear, the second gear is mounted in the central control panel and driven to rotate by the first driving member;
a curved rack, the curved rack is mounted in the first support, the curved rack is parallel to the curved sliding rail and meshed with the second gear. The first driving member drives the second gear to rotate, thereby driving the first support to move along the curved sliding rail.

6. The vehicle-mounted display screen adjusting device as claimed in claim **1,** wherein the curved sliding rail is an arc-shaped curved sliding rail, a convex surface of the curved sliding rail faces the front of the central control panel, and a concave surface of the curved sliding rail faces the rear of the central control panel.

7. The vehicle-mounted display screen adjusting device as claimed in claim **1,** wherein further comprises a rotating module configured to connect the first support with the display screen, the rotating module comprises:
a second support, the second support is connected to the first support and rotatable relative to the first support, the display screen is connected to the second support;
a second driving member, the second driving member is mounted in the first support;
a first gear, the first gear is mounted to the display screen and driven to rotate by the second driving member, the second driving member drives the first gear to rotate, thereby driving the display screen to transversely rotate relative to the first support.

8. The vehicle-mounted display screen adjusting device as claimed in claim **1,** wherein further comprises a swinging module for connecting the first support with the display screen, the swinging module comprises:
a third support, the third support is connected to the first support and rotatable relative to the first support, the display screen is connected to the third support;
a fourth driving member, the fourth driving member is mounted in the first support;
a third gear, the third gear is fixed to the third support and driven to rotate by the fourth driving member, the fourth driving member drives the third gear to rotate, thereby driving the third support to swing left and right relative to the first support.

9. The vehicle-mounted display screen adjusting device as claimed in claim **1,** wherein further comprises a rotating module connected to the display screen and configured to enable the display screen transversely rotating and a swinging module connected to the rotating module and configured to enable the display screen swinging left and right;
the swinging module comprises:
a third support, the third support is connected to the first support and rotatable relative to the first support;
a fourth driving member, the fourth driving member is mounted in the first support;
a third gear, the third gear is fixed to the third support and driven to rotate by the fourth driving member, the fourth driving member drives the third gear to rotate, thereby driving the third support to swing left and right relative to the first support;
the rotating module comprises:
a second driving member, the second driving member is mounted on the third support;
a first gear, the first gear is mounted o the display screen and driven to rotate by the second driving member, the second driving member drives the first gear to rotate, thereby driving the display screen to transversely rotate relative to the third support.

10. A vehicle, comprising the vehicle-mounted display screen adjusting device as claimed in any one of claims **1** to **9.**
